Europäisches Patentamt

European Patent Office

Office européen des brevets

(11) Publication number: **0 130 086**
**B1**

# (12) EUROPEAN PATENT SPECIFICATION

(45) Date of publication of patent specification: **28.10.87**

(51) Int. Cl.⁴: **C 01 G 25/00**

(21) Application number: **84304351.4**

(22) Date of filing: **27.06.84**

(54) **Methods of manufacturing fine powder from strontium zirconate.**

(30) Priority: **27.06.83 JP 115475/83**

(43) Date of publication of application:
**02.01.85 Bulletin 85/01**

(45) Publication of the grant of the patent:
**28.10.87 Bulletin 87/44**

(84) Designated Contracting States:
**DE FR GB NL**

(56) References cited:
**US-A-4 293 535**

**CHEMICAL ABSTRACTS, vol. 64, no. 7, 1966, column 9210g, Columbus, Ohio, USA; YU.M. GALKIN et al.: "Preparation of strontium and barium zirconates under hydrothermal conditions"**

**CHEMICAL ABSTRACTS, vol. 91, no. 7, 13th August 1979, page 283, no. 61660r, Columbus, Ohio, USA; L.V. VOLOD'KO et al.: "Low-temperature method for preparing some complex oxide materials"**

**CHEMICAL ABSTRACTS, vol. 90, no. 22, May 1979, page 315, no. 173487a, Columbus, Ohio, USA**

**Zh. Neorg Khim, vol. 11(1): 1966, p. 216-219**

(73) Proprietor: **SONY CORPORATION**
**7-35 Kitashinagawa 6-Chome Shinagawa-ku Tokyo 141 (JP)**

(72) Inventor: **Uedaira, Satoru c/o Sony Corporation Patents Division 7-35 Kitashinagawa 6-chome Shinagawa-ku Tokyo (JP)**
Inventor: **Yamanoi, Hiroshi c/o Sony Corporation Patents Division 7-35 Kitashinagawa 6-chome Shinagawa-ku Tokyo (JP)**
Inventor: **Suzuki, Masayuki c/o Sony Corporation Patents Division 7-35 Kitashinagawa 6-chome Shinagawa-ku Tokyo (JP)**
Inventor: **Tamura, Hidemasa c/o Sony Corporation Patents Division 7-35 Kitashinagawa 6-chome Shinagawa-ku Tokyo (JP)**
Inventor: **Suzuki, Hiroyuki c/o Sony Corporation Patents Division 7-35 Kitashinagawa 6-chome Shinagawa-ku Tokyo (JP)**

(74) Representative: **Cotter, Ivan John et al D. YOUNG & CO. 10 Staple Inn London WC1V 7RD (GB)**

## Description

This invention relates to methods of manufacturing fine powder form strontium zirconate ($SrZrO_3$), which is a dielectric material.

In recent years, the manufacture of fine powder form ceramic materials has been studied and developed from different angles. One of the applications of finely divided ceramic materials is in ceramic capacitors. The recent trend in electronic articles is towards making them compact and of high performance. Capacitors, which are often important parts of electronic articles, are naturally required to be small in size and light in weight with large capacitance and improved high frequency characteristics. In order to satisfy these requirements, there recently has been an increasing demand for multilayer ceramic capacitors. The manufacture of multilayer ceramic capacitors requires the use of ceramic materials which have high dielectric constants and are in the form of powder having a fine and uniform size.

Finely divided ceramic materials may be applied not only to the above-described ceramic capacitors, but also in the optical fields.

On known ceramic material used for the above purposes is strontium zirconate ($SrZrO_3$). Fine powder form strontium zirconate has been heretofore produced, for example, by a method which comprises mixing powders of strontium carbonate ($SrCO_3$) and zirconium oxide ($ZrO_2$), moulding the mixture under pressure, subjecting the moulded mixture to a solid phase reaction at about 1400°C, and mechanically pulverising the resulting product to obtain a fine powder. The fine powder form $SrZrO_3$ obtained by the above method is of large and non-uniform particle size. According to the above method, the particle size is classified by sieving, with the attendant drawback that impurities are inevitably incorporated therein in relatively large amounts, along with coarse particles. Apart from the above method, several methods are known, including an alkoxide method, an oxalate method, and the like. These methods involve the problem of high production cost.

Zh. Neorgan. Khim., Volume 11(1), pages 216—219, 1966, discloses a method of manufacturing strontium zirconate by hydrothermal treatment of a highly alkaline mixture of strontium hydroxides and zirconium hydroxide at a temperature in the range of 180 to 350°C.

According to the present invention there is provided a method of manufacturing strontium zirconate in fine powder form, which method comprises:

reacting a hydrolysate of a zirconium compound with a strontium compound, in an Sr-to-Zr molar ratio of not less than 0.35:1 and in a strongly alkaline aqueous solution, for a time sufficient to complete the reaction at a temperature of not less than 88°C, thereby forming strontium zirconate as a precipitate;

separating the precipitate from the solution; and

drying the precipitate to obtain strontium zirconate in fine powder form;

characterised in that the reaction is carried out at a pH of not less than 14.45.

Preferred methods embodying the present invention and described in detail below enable the manufacture of very fine powder form strontium zirconate having particles uniform in size and having high surface activity. Further, the preferred methods enable fine powder form strontium zirconate to be manufactured inexpensively because of the use of cheap starting materials.

The invention will now be further described, by way of illustrative and non-limiting example, with reference to the accompanying drawings, in which:

Figure 1 is an X-ray diffraction pattern of fine powder form $SrZrO_3$ manufactured by a method embodying the present invention;

Figures 2 and 3 are scanning electron micrographs of fine powder form $SrZrO_3$ manufactured by a method embodying the present invention;

Figure 4 is a graph showing a relationship between the amount of formed $SrZrO_3$ and the pH of a reaction system for different ratios by mole of Sr and Zr;

Figure 5 is a graph showing a relationship between the amount of formed $SrZrO_3$ and the molar ratio of Sr/Zr for different pH values;

Figure 6 is a graph showing a relationship between the amount of $SrZrO_3$ and reaction time for different pH values;

Figure 7 is a graph showing a relationship between the amount of formed $SrZrO_3$ and reaction temperature; and

Figures 8 and 9 are graphs showing the results of a differential thermal analysis and a thermogravimetric analysis, respectively, of $SrZrO_3$ manufactured by a method embodying the present invention.

Zr compounds used as a hydrolysate for reaction with strontium compounds should be soluble in water and include, for example, $ZrCl_4$, $ZrOCl_2 \cdot 8H_2O$, $Zr(NO_3)_4$, $ZrO(NO_3)_2 \cdot 2H_2O$, $Zr(SO_4)_2$, and $ZrOSO_4$.

In order to obtain a hydrolysate of a zirconium compound such as zirconium chloride, an aqueous solution of the chloride is prepared and an alkaline substance (such as ammonium hydroxide, sodium hydroxide, potassium hydroxide, lithium hydroxide or the like) is added to the solution until the pH of the solution becomes neutral. As a result, $ZrO_2 \cdot xH_2O$ is formed. When zirconium chloride is used as the zirconium compound, a strontium compound may be added prior to or after the hydrolysis. On the other hand, with zirconium sulphate, after an aqueous solution of the sulphate is prepared and hydrolysed to

2

form $ZrO_2 \cdot xH_2O$, it is necessary to remove sulphate radicals such as by filtration or washing with water. In this case, Sr compounds should be added after completion of the hydrolysis.

Sr compounds useful in the practice of the invention include, for example, $SrO$, $Sr(OH)_2$, $Sr(OH)_2 \cdot 8H_2O$, $SrCl_2$, $Sr(NO_3)_2$, and $Sr(CH_3COO)_2$.

The pH of the strongly alkaline aqueous solution is preferably not less than 14.6. The molar ratio of Sr and Zr in the solution is preferably not less than 0.7. The reaction time is generally greater than 1 hour, and preferably greater than 3 hours.

As a result of the reaction, fine powder form $SrZrO_3$ is formed as a precipitate. The fineness or particle size of the powder is from 1 to 3 µm and the particles are uniform in size. After completion of the reaction, the precipitate is usually separated, washed with water and dried.

When such a fine powder is used to make, for example, a multilayer ceramic capacitor, it becomes possible for the capacitor to have a large capacitance and an improved high frequency characteristic as well as being small in size and light in weight. Because inexpensive starting materials are used, the fine powder of $SrZrO_3$ can be manufactured more inexpensively than in the known solid phase reaction method or the known alkoxide method.

The present invention will now be described in more detail by way of examples.

Example 1

50 g of $ZrCl_4$ was added to 100 cc of iced water while agitation was carried out, thereby obtaining an aqueous solution of Zr. To the solution was added an aqueous solution of $Sr(NO_3)_2$ in such an amount that Sr and Zr were contained in equimolar quantities, after which a KOH solution was added in order to adjust the pH to 14.8. This was followed by reaction at 100°C for 8 hours. After completion of the reaction, the resulting precipitate was filtered, washed with water, and dried over a day and night at 80°C.

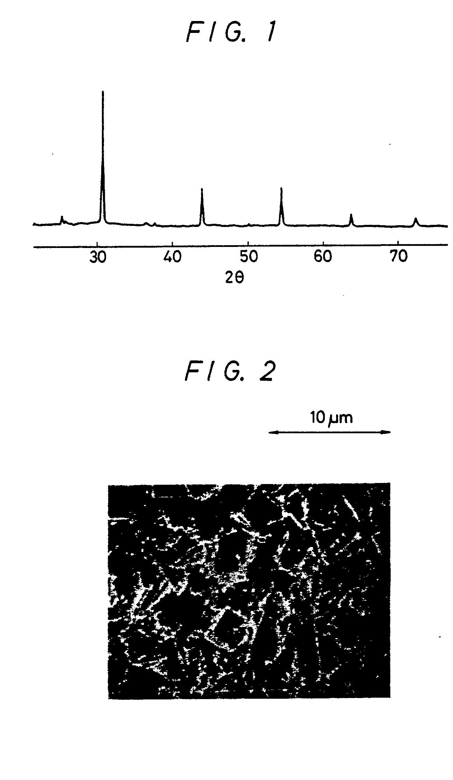

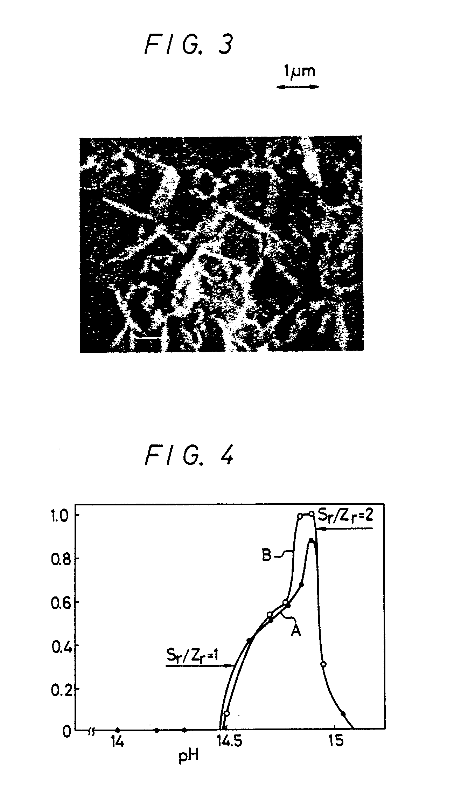

The substance obtained by the above procedure was subjected to X-ray diffraction analysis using a copper target and a nickel filter. The results are shown in Figure 1. According to the ASTM card, this substance had the same diffraction pattern as 10—268 and was thus identified as $SrZrO_3$. Scanning electron micrographs of the substance are shown in Figures 2 and 3.

Example 2

50 g of $ZrCl_4$ was added to 100 cc of water, while agitation was carried out, to obtain an aqueous solution of Zr. To the solution was added an NaOH solution for neutralisation, to make the pH approximately 7, after which $SrCl_2$ was added in such an amount that equimolar quantities of Sr and Zr were contained. Thereafter, the pH of the mixture was adjusted to 14.7 by addition of an NaOH solution. This was followed by reaction at 100°C for 8 hours. The resulting precipitate was filtered, washed with water, and dried at 100°C for 1 day.

The substance obtained by the above procedure had the same X-ray diffraction pattern as in Figure 1 and was thus identified as $SrZrO_3$. Observation by way of a scanning electron microscope showed fine particles similar to those of Figures 2 and 3.

Example 3

50 g of $ZrCl_4$ was added to 200 cc of iced water, while agitation was carried out, to obtain an aqueous solution of Zr. To the solution was added a solution of $NH_4OH$ for hydrolysis, with the pH being adjusted to approximately 7. Subsequently, $Sr(OH)_2$ was added to the solution in such an amount that Sr and Zr were in equimolar quantities, after which the pH was adjusted to 14.9 by means of a solution of $NH_4OH$. The thus-adjusted solution was subjected to reaction at 100°C for 9 hours. After completion of the reaction, the resulting precipitate was filtered, washed with water, and dried at 80°C over a day and night.

The substance obtained by the above procedure had the same X-ray diffraction pattern as in Figure 1 and was thus identified as $SrZrO_3$. Observation by way of a scanning electron microscope revealed fine particles similar to those of Figures 2 and 3.

Example 4

To 200 cc of an aqueous solution of $Zr(NO_3)_4$ was added a solution of $NH_4OH$ for neutralisation, with the pH being adjusted to approximately 7, after which the precipitate that was produced was filtered and washed with water. The precipitate was placed in one litre of water, to which was added $SrCl_2$ in such an amount that Sr and Zr were contained in equimolar quantities. This was followed by adjusting the pH to 14.7 by means of a solution of KOH. The solution was subjected to reaction at 100°C for 8 hours. After completion of the reaction, the resulting precipitate was filtered and washed with water, after which it was dried over a day and night at 80°C.

The substance obtained by the above procedure had the same X-ray diffraction pattern as in Figure 1 and was thus identified as $SrZrO_3$. Observation by way of a scanning electron microscope showed fine particles similar to those of Figures 2 and 3.

Example 5

In this example, the pH dependence of the amount of $SrZrO_3$ was determined. After hydrolysis of $ZrCl_4$, $Sr(NO_3)_2$ was added at Sr/Zr=1 (equimolar quantities). Different amounts of a KOH solution were then added to give samples of different pH concentrations. Each sample was subjected to reaction at 100°C for 8 hours and an amount of resulting $SrZrO_3$ of the rhombic system was measured. The results are shown in Figure 4 as curve (A). In Figure 4, curve (B) shows an amount of $SrZrO_3$ at Sr/Zr=2. The amount of $SrZrO_3$ on the ordinate is obtained by calculation from an area of the X-ray diffraction peak (002) and is a relative value with the maximum amount being taken as 1. From Figure 4, it will be seen that the pH is generally not less than 14.45, and preferably not less than 14.6.

Example 6

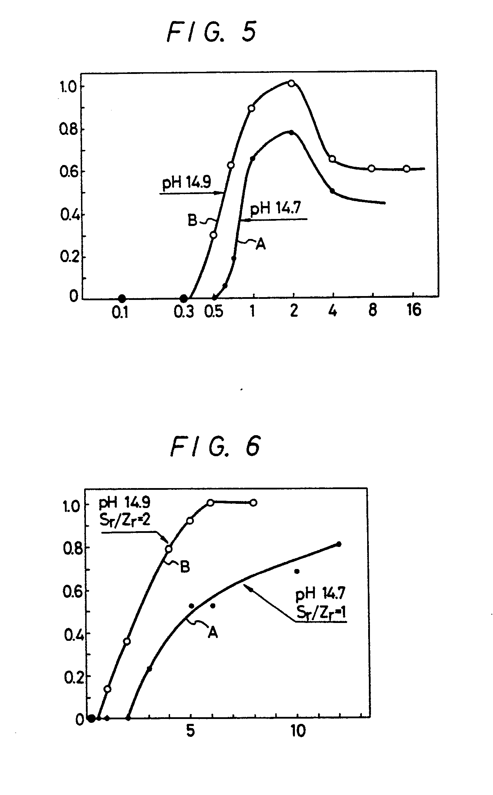

In this example, the dependence of the amount of $SrZrO_3$ on the molar ratio was determined. Two samples having pH values of 14.7 and 14.9, respectively, were subjected to reaction at 100°C for 9 hours at different molar ratios of Sr/Zr. The amounts of $SrZrO_3$ formed by the reaction were plotted in Figure 5. In Figure 5, curve (A) indicates the case where the pH was 14.7 and curve (B) indicates the case where the pH was 14.9. From Figure 5, it will be seen that the molar ratio of Sr/Zr was not less than 0.35, and preferably not less than 0.7.

Example 7

In this example, the dependence of the amount of $SrZrO_3$ on the reaction time was determined. Two samples which had, respectively, Sr/Zr=1 and pH=14.7, and Sr/Zr=2 and pH=14.9, were each subjected to reaction at 100°C for different reaction times. Amounts of $SrZrO_3$ for the two respective cases are plotted in Figure 6. Curve (A) is for the case where Sr/Zr=1 and pH=14.7 and curve (B) is for the case where Sr/Zr=2 and pH=14.9. From Figure 6, it will be seen that the reaction time is generally greater than 1 hour, and preferably greater than 3 hours.

Example 8

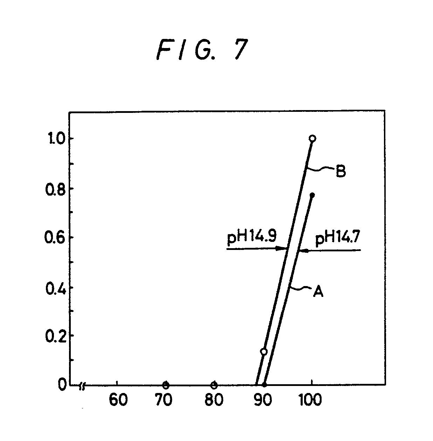

In this example, the dependence of the amount of $SrZrO_3$ on the reaction temperature was determined. Two samples having pH values of 14.7 and 14.9, respectively, and Sr/Zr=2, were each subjected to reaction at different temperatures for 8 hours (except that the reaction time was 11 hours only at 90°C). Amounts of $SrZrO_3$ produced are plotted in Figure 7. Curve (A) is for the case where pH=14.7 and curve (B) is for the case where pH=14.9. From Figure 7, it will be seen that the reaction temperature should preferably not be less than 88°C.

Example 9

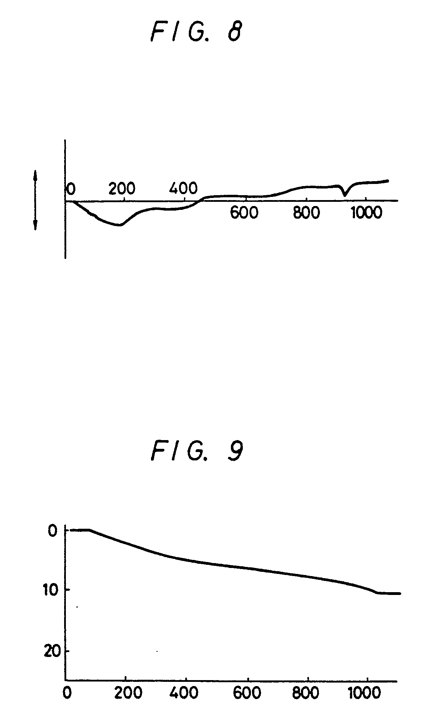

$SrZrO_3$ which was prepared under the conditions Sr/Zr=1, pH=14.9, 100°C and 10 hours, was subjected to differential thermal analysis (DTA) and thermogravimetric analysis (TG). The results of these analyses are shown in Figures 8 and 9, respectively.

**Claims**

1. A method of manufacturing strontium zirconate in fine powder form, which method comprises:
reacting a hydrolysate of a zirconium compound with a strontium compound, in an Sr-to-Zr molar ratio of not less than 0.35:1 and in a strongly alkaline aqueous solution, for a time sufficient to complete the reaction at a temperature of not less than 88°C, thereby forming strontium zirconate as a precipitate;
separating the precipitate from the solution; and
drying the precipitate to obtain strontium zirconate in fine powder form;
characterised in that the reaction is carried out at a pH of not less than 14.45.
2. A method according to claim 1, wherein the pH is not less than 14.6.
3. A method according to claim 1 or claim 2, wherein the molar ratio is not less than 0.7:1.
4. A method according to any one of the preceding claims, wherein the zirconium compound is one or more of $ZrCl_4$, $ZrOCl_2 \cdot 8H_2O$, $Zr(NO_3)_4$, $ZrO(NO_3)_2 \cdot 2H_2O$, $Zr(SO_4)_2$, and $ZrOSO_4$.
5. A method according to any one of the preceding claims, wherein the strontium compound is one or more of SrO, $Sr(OH)_2$, $Sr(OH)_2 \cdot 8H_2O$, $SrCl_2$, $Sr(NO_3)_2$, and $(CH_3COO)_2Sr$.

**Patentansprüche**

1. Verfahren zur Herstellung von feinteiligem Strontiumzirkonat, mit
Reagierenlassen eines Hydrolysats einer Zirkoniumverbindung mit einer Strontiumverbindung in einem Sr-zu-Zr-Molverhältnis von nicht weniger als 0,35:1 und in einer stark alkalischen wässrigen Lösung über eine Zeit, die ausreichend ist, um die Reaktion bei einer Temperatur von nicht weniger als 88°C zu vollenden, um dadurch Strontiumzirkonat als einen Niederschlag zu bilden,
Trennen des Niederschlags von der Lösung und
Trocknen des Niederschlags, um feinteiliges Strontiumzirkonat zu gewinnen,
dadurch gekennzeichnet, daß die Reaktion bei einem pH-Wert von nicht weniger als 14,45 ausgeführt wird.
2. Verfahren nach Anspruch 1, bei dem der pH-Wert nicht kleiner als 14,6 ist.
3. Verfahren nach Anspruch 1 oder 2, bei dem das Molverhältnis nicht kleiner als 0,7:1 ist.

4

4. Verfahren nach einem der vorhergehenden Ansprüche, bei dem die Zirkoniumverbindung aus einem oder mehreren der Bestandteile $ZrCl_4$, $ZrOCl_2 \cdot 8H_2O$, $Zr(NO_3)_4$, $ZrO(NO_3)_2 \cdot 2H_2O$, $Zr(SO_4)_2$ und $ZrOSO_4$ besteht.

5. Verfahren nach einem der vorhergehenden Ansprüche, bei dem die Strontiumverbindung aus einem oder mehreren der Bestandteile SrO, $Sr(OH)_2$, $Sr(OH)_2 \cdot 8H_2O$, $SrCl_2$, $Sr(NO_3)_2$ und $(CH_3COO)_2Sr$ besteht.

**Revendications**

1. Un procédé de fabrication du zirconate de strontium sous forme de poudre fine, ledit procédé comprenant:

— la réaction d'un hydrolysat d'un composé du zirconium avec un composé du strontium dans un rapport molaire Sr:Zr non inférieur à 0,35:1 et dans une solution aqueuse fortement alcaline, pendant un temps suffisant pour compléter la réaction à une température non inférieure à 88°C pour former ainsi du zirconate de strontium sous la forme d'un précipité,
— la séparation du précipité de la solution,
— et le séchage du précipité pour obtenir du zirconate de strontium sous forme de poudre fine,

ledit procédé étant caractérisé en ce que la réaction est conduite à un pH non inférieur à 14,45.

2. Un procédé selon la revendication 1, caractérisé en ce que le pH n'est pas inférieur à 14,6.

3. Un procédé selon la revendication 1 ou 2, caractérisé en ce que le rapport molaire n'est pas inférieur à 0,7:1.

4. Un procédé selon l'une quelconque des revendications précédentes, caractérisé en ce que le composé du zirconium est un ou plusieurs composés du groupe $ZrCl_4$, $ZrOCl_2 \cdot 8H_2O$, $Zr(NO_3)_4$, $ZrO(NO_3)_2 \cdot 2H_2O$, $Zr(SO_4)_2$ et $ZrOSO_4$.

5. Un procédé selon l'une quelconque des revendications précédentes, caractérisé en ce que le composé du strontium est un ou plusieurs composés du groupe SrO, $Sr(OH)_2$, $Sr(OH)_2 \cdot 8H_2O$, $SrCl_2$, $Sr(NO_3)_2$, et $(CH_3COO)_2Sr$.

## F I G. 1

## F I G. 2

10 μm

## FIG. 3

1μm

## FIG. 4

## FIG. 5

## FIG. 6

# FIG. 7

FIG. 8

FIG. 9